# EUROPEAN PATENT APPLICATION

(11) **EP 3 886 019 A1**
(43) Date of publication of application: **29.09.2021**
(21) Application number: 21157814.1
(22) Date of filing: 18.02.2021
(51) Int. Cl.: G06Q 10/08

(54) **COMMODITY REPLENISHMENT SYSTEM**

(30) Priority: 24.03.2020 JP 2020053062
(71) Applicant: Toshiba TEC Kabushiki Kaisha, Tokyo 141-8562 (JP)
(72) Inventor: Kawaguti, Takesi, Shinagawa-ku, Tokyo 141-8562 (JP)
(74) Representative: Bandpay & Greuter

(57) **Abstract**

An inventory management system includes a code reader configured to perform an ID reading, a wireless tag reader provided along with the code reader and configured to perform commodity code reading, and a processing device. The processing device, upon an ID read by the code reader for check-in being associated with a commodity replenisher, determines a number of arriving commodities having a commodity code based on a commodity code reading performed when the ID is read for check-in. When the ID is read by the code reader for checking out, the number of departing commodities having the commodity code is determined based on a commodity code reading performed for check-out. The number of replenished commodities is then determined based on a difference between the number of arriving commodities and departing commodities.

## Description

### FIELD

Exemplary embodiments described herein relate to a commodity replenishment system for inventory management purposes.

### BACKGROUND

There are various sales management systems that enable commodities being displayed in stores to be purchased without any involvement of store staff.

As one example of such a system, a sales management system that tracks actions of customers in a store using a large number of cameras and also monitors removal of displayed commodities using sensors integrated with the display shelves or the like is known. Such a sales management system identifies when a commodity is being purchased by a customer based on a combination of an image captured by a camera and a signal from a display shelf sensor. The commodity data for the commodity identified as being purchased is then registered on a customer's purchase list that is maintained by the sales management system. The sales management system ultimately processes the customer's payment for purchased items based on the commodity data registered on the customer's purchase list.

However, even with such a sales management system for achieving an unmanned store operation (that is, a store with no or fewer cashiers), replenishment items on the display shelves and the like, is still necessary. That is, store employees are still generally required to manually perform shelf restocking operations, and thus the store operation is not entirely unmanned (automated). Using robots for unmanned replenishment of the purchased commodities has been considered, but the initial investment required to implement such a solution may be large. For many stores, it is desirable to minimize the costs associated with any switchover to automated or unmanned store operation, thus acquiring restocking robots or the like will not be a preferred solution for such stores.

### DESCRIPTION OF THE DRAWINGS

FIG. 1 is a block diagram illustrating a schematic configuration of an inventory management system according to a first embodiment.
FIG. 2 is a block diagram of a store server in the inventory management system.
FIG. 3 is a schematic diagram illustrating a data structure of a delivery confirmation table included in a store server.
FIG. 4 is a schematic diagram illustrating a data structure of a replenisher table temporarily created by a store server.
FIG. 5 is a schematic diagram illustrating a data structure of an inventory database included in a store server.
FIG. 6 is a flowchart of an inventory database updating process which is periodically executed by a processor of a store server.
FIG. 7 is a flowchart of a commodity ordering process that a processor of a store server periodically executes.
FIG. 8 is a schematic diagram illustrating a data structure of order source information and order content information in a general commodity order instruction.
FIG. 9 is a schematic diagram illustrating a data structure of order source information in a commodity order instruction according to an inventory management system of a first embodiment.
FIG. 10 is a schematic diagram illustrating a data structure of delivery destination information and delivery content information in a delivery instruction to an online shopping user transmitted from an online shopping server to a delivery person server.
FIG. 11 is a schematic diagram illustrating a data structure of delivery destination information and delivery content information in a delivery instruction to a store transmitted from an online shopping server to a delivery person server.
FIG. 12 is a flowchart of a registration process for the number of items when entering the store as executed by a processor of a store server when a replenisher enters a store.
FIG. 13 is a flowchart of a commodity inspection process executed by a processor of a store server when a replenisher leaves a store.
FIG. 14 is a schematic diagram illustrating a data structure of an inventory database included in a store server in an inventory management system according to a second embodiment.
FIG. 15 is a flowchart of a commodity inspection process executed by a processor of a store server according to a second embodiment when a replenisher leaves a store.

### DETAILED DESCRIPTION

An object of the present disclosure is to provide a commodity replenishment system for inventory management purposes that permits commodity replenishment without necessarily relying on store employees to perform the replenishment operation.

In general, according to an embodiment, an inventory management system includes a code reader configured to perform an ID reading for checking in and out of a store entrance, a wireless tag reader provided at the store entrance with the code reader and configured to perform a commodity code reading, and a processing device. The processing device is configured to, upon an ID read by the code reader for check-in being associated with a commodity replenisher, determine a number of arriving commodities having a commodity code based on a commodity code reading performed when the ID is read for check-in. Then, upon the member ID being read by the code reader for checking out, the processing device is configured to determine a number of departing commodities having the commodity code based on a commodity code reading performed when the ID is read for check-out. The processing device then determines the number of replenished commodities based on a difference between the number of arriving commodities and departing commodities.

Preferably, the processing device is further configured to: store an inventory number of commodities having a commodity code; and update the inventory number by adding the number of replenished commodities having the commodity code to the stored inventory number for the commodity code.

Preferably, the processing device is further configured to: upon an ID being read by the code reader for check-out being associated with a customer, determine a number of purchased commodities based on a commodity code reading performed by the wireless tag reader at check-out of the customer; and update the inventory number for a commodity code by subtracting the number of purchased commodities of the commodity code from the stored inventory number for the commodity code.

Preferably, the inventory management system further comprises a sensor configured to detect commodity removal and return at a commodity display. The processing device is further configured to: store a displayed number of commodities having a commodity code; determine a number of removed commodities having the commodity code based on a signal from the sensor; and update the displayed number by subtracting the number of removed commodities from the stored displayed number.

Preferably, the processing device is further configured to: determine a number of commodities returned to the commodity display based on a signal from the sensor; and update the displayed number by adding the number of commodities returned to the commodity display to the stored displayed number.

Preferably, the processing device is further configured to: determine whether the inventory number matches the displayed number; when the inventory number matches the displayed number, determine whether the inventory number is less than a threshold number; and when the inventory number is less than the threshold number, generate an order for inventory replenishment.

Preferably, the processing device is further configured to: determine a sum of the stored inventory number stored and the number of replenished commodities; determine whether the sum matches the displayed number; and update the inventory number when the sum matches the displayed number.

Preferably, the processing device is further configured to: determine whether the displayed number is less than a threshold number when the sum does not match the displayed number; and generate a warning signal when the displayed number is less than the threshold number.

There is also provided an inventory management method, comprising: upon an ID associated with a commodity replenisher being read by a code reader for entrance to a store, determining a number of arriving commodities based on a commodity code reading performed by a wireless tag reader at the entrance to the store; upon the ID associated with the commodity replenisher being read by the code reader for a check-out from the store, determine a number of departing commodities based on a commodity code reading performed by the wireless tag reader for the check-out; and determine a number of replenished commodities based on a difference between the number of arriving commodities and the number of departing commodities.

Preferably, the inventory management method further comprises: storing an inventory number of commodities having a commodity code; and updating the inventory number by adding the number of replenished commodities to the stored inventory number.

Preferably, the inventory management method further comprises: upon an ID read by the code reader for check-out being associated with a customer, determining a number of purchased commodities based on a commodity code reading performed by the wireless tag reader at check-out of the customer; and updating the inventory number for a commodity code by subtracting the number of purchased commodities of the commodity code from the stored inventory number for the commodity code.

Preferably, the inventory management method further comprises: storing a displayed number of commodities having the commodity code; detecting, with a sensor, a commodity removal from a commodity display section for commodities having the commodity code; determining a number of removed commodities based on the detection with the sensor; and updating the displayed number by subtracting the number of removed commodities from the stored displayed number.

Preferably, the inventory management method further comprises: detecting, with the sensor, a number of commodities return to the commodity display section; and updating the displayed number by adding the number of commodities returned to the commodity display to the stored displayed number.

Preferably, the inventory management method further comprises: determining whether the inventory number matches the displayed number; when the inventory number matches the displayed number, determining whether the inventory number is less than a threshold number; and when the inventory number is less than the threshold number, generating an order for inventory replenishment.

Preferably, the inventory management method further comprises: determining a sum of the stored inventory number and the number of replenished commodities; and determining whether the sum matches the displayed number, and update the inventory number when the sum matches the displayed number.

Hereinafter, certain example embodiments of a commodity replenishment system (also referred to as an inventory management system) will be described with reference to the drawings.

### [First Embodiment]

In an first embodiment, the inventory management system uses a sales management system that enables items displayed in a store to be sold without the direct involvement of store employees such as salesclerks or cashiers.

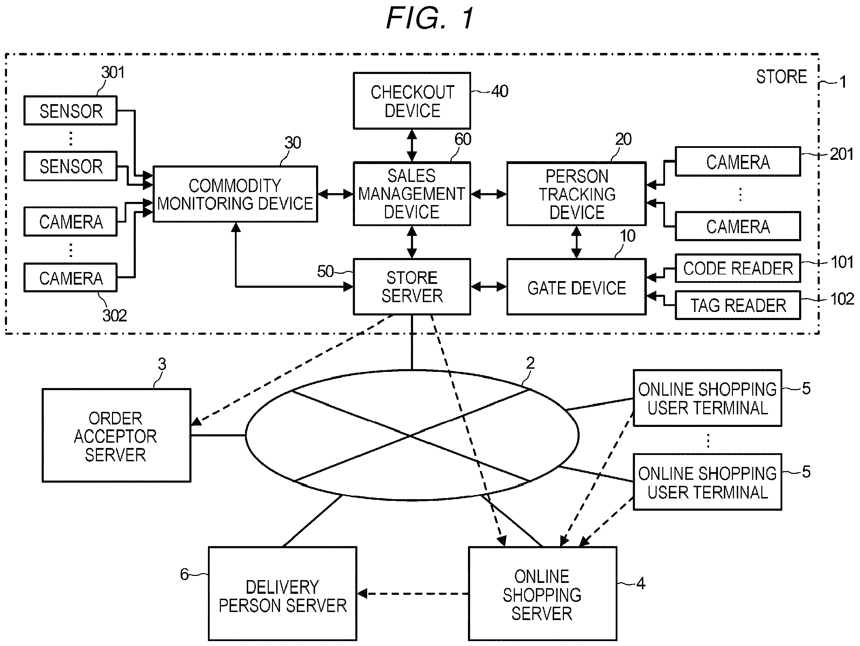

FIG. 1 is a block diagram illustrating a schematic configuration of the inventory management system according to the first embodiment. This inventory management system uses a sales management system configured in a store 1. The sales management system includes a gate device 10, a person tracking device 20, a commodity monitoring device 30, a checkout device 40, a store server 50, and a sales management device 60. The gate device 10 is connected to the person tracking device 20 by a communication unit. The person tracking device 20, the commodity monitoring device 30, the checkout device 40, and the store server 50 are connected to the sales management device 60 by a communication unit. The gate device 10 may be further connected to at least one of the store server 50 or the sales management device 60 by a communication unit. A communication unit can be, for example, a Local Area Network (LAN). The LAN may be a wired LAN and/or a wireless LAN.

The gate device 10 accepts a check-in operation for a customer who is a visitor to enter the store and a check-out operation for leaving the store. Then, the gate device 10 selectively opens to allow a customer to enter or leave the store and closes to prevent a customer from entering or leaving the store.

A code reader 101 and a tag reader 102 are connected to the gate device 10. The gate device 10 has a gate mechanism including a door or gate mechanism for opening and closing the gate and a gate passage sensor for detecting when a person passes through the gate.

The code reader 101 reads a customer ID as presented by a customer who checks in or out of the store. The customer ID is a unique identification code assigned to a customer who uses the store 1. The customer ID can be a member ID for a loyalty rewards program or the like. The customer ID is displayed in the form of a barcode on the display of a smartphone carried by the customer, for example. In this case, the code reader 101 is a barcode reader. The customer ID may be stored in an IC chip of an ID card carried by the customer, for example. In this case, the code reader 101 is a card reader.

The tag reader 102 reads a commodity tag attached to a commodity carried by a customer who checks out from the store. The commodity tag has a unique commodity code assigned to the commodity. The commodity tag may be an RF tag (e.g., a radio frequency identification (RFID) tag) having a commodity code embedded therein. In this case, the tag reader 102 is an RFID reader. Many RF tags can be read at once and, as such, there is no need for the customer to hold each commodity tagged item individually over the tag reader 102. However, in some instances, a barcode printed on the package of the commodity may be used. In this case, the tag reader 102 is a barcode reader.

When the customer ID of the customer who is about to enter the store is read by the code reader 101, the gate device 10 inquires about validity of (authenticates) the customer ID. The inquiry destination is, for example, the store server 50. When validity of the customer ID is confirmed, the gate device 10 opens the gate of the gate mechanism and notifies the person tracking device 20 of the customer ID of the entering customer via the communication unit. When validity of the customer ID is not confirmed, the gate device 10 closes (or keeps close) the gate of the gate mechanism to prevent the customer from entering the store and causes a display unit to display a message or an image for notifying the customer of the store entry refusal.

Furthermore, the gate device 10 also operates to read the commodity tag(s) on items being brought into the store 1 by the customer by using the tag reader 102 when the customer passes through the opened gate to enter the store. The gate device 10 transmits such acquired commodity codes to, for example, the store server 50.

When the customer ID of the customer who is about to leave the store is read by the code reader 101, the tag reader 102 reads the commodity codes of the items presently possessed by the customer and the gate device 10 uses the customer ID and the read commodity code(s) to inquire whether the customer can leave the store. The inquiry destination is, for example, the store server 50. The store server 50 checks whether the necessary settlement processing was completed items corresponding to the read commodity codes, excluding the commodity code(s) of the items brought in by the customer when entering the store. If the settlement process corresponding to the registered commodity codes was completed, the store server 50 returns a response to the gate device 10 allowing the customer to leave the store. In response, the gate device 10 opens the gate of the gate mechanism. When the customer is not allowed to leave the store, the gate device 10 closes (or keeps closed) the gate of the gate mechanism to prevent the customer from leaving the store and causes a display unit to display a message or an image for notifying the customer that there is an unsettled (unpaid) commodity.

Although only one gate device 10 is illustrated in FIG. 1, the number of gate devices 10 is not particularly limited. The sales management system may include a plurality of gate devices 10.

The person tracking device 20 is a device for tracking the actions until the customer leaves the store. The person tracking device 20 is connected to cameras 201 mounted on the ceiling of the store or the like. The person tracking device 20 tracks each action of the customer by analyzing the images captured by those cameras 201. In general, many cameras 201 will be utilized.

When the person tracking device 20 initially receives a customer ID from the gate device 10, the person tracking device 20 creates a tracking file corresponding to the customer ID. The person tracking device 20 captures an image or images of the person who has passed through the gate from a camera 201 near the gate and identifies this person as the customer matching the customer ID. Then, the person tracking device 20 tracks the customer in images taken by the plurality of cameras 201 while the customer moves through the store for tracking the movement of the customer while shopping or the like. The person tracking device 20 acquires position information for the customer every second (1 sec), for example, and stores position information in the tracking file for the corresponding customer ID in time series. The position information is specified by the X-Y coordinates obtained by setting an arbitrary point on the sales floor surface as an origin O of the X-Y plane and dividing the sales floor into arbitrary distance increments referenced to the origin O.

The commodity monitoring device 30 is for monitoring the movement of each commodity displayed in a display place such as a commodity shelf, a commodity case, a sales space, a display location, sales table, sales counter, or the like. In general, a large number of sensors 301 and a large number of cameras 302 are connected to the commodity monitoring device 30.

The commodity monitoring device 30 monitors with the sensors 301 whether a commodity is moved away from the display place or the commodity returned to the display place. The sensor 301 comprises, for example, an optical sensor and a weight sensor (e.g., a weight scale). That is, when the optical sensor detects the movement of the commodity and/or the weight sensor detects that the total weight of the items displayed at the display place has been reduced, the commodity monitoring device 30 recognizes that a commodity was moved away from the display place. Similarly, when the optical sensor detects the movement of the commodity and/or the weight sensor detects the total weight of the items displayed at the display place has increased, the commodity monitoring device 30 recognizes that a commodity was returned or otherwise placed at the display place.

Further, the commodity monitoring device 30 has a function of identifying the commodity type and/or category of commodity that has been moved. Specifically, the camera 302 is provided at the display place of each commodity and the commodity monitoring device 30 identifies type of the moved commodity from the characteristics in the image captured by the camera 302. A technique for identifying a commodity from an image is well known and a description thereof will be omitted here.

The commodity monitoring device 30 monitors the movement of the commodities with a signal from the sensor 301. Then, when detecting that a commodity has moved, the commodity monitoring device 30 acquires the moving direction, the moving time, and the place code. In this context, the moving direction is information that specifies whether the commodity was removed from the display place or returned to the display place. Hereinafter, when a commodity is taken from its display place, this is referred to as movement in a purchase direction. When a commodity is returned to a display place, this is referred to as movement in a return direction. The moving time is the time when the movement (removal or return) of the commodity was detected. The place code is a code indicating the display place for the commodity that was moved. A unique place code can be set in advance at the display places of each commodity of the store.

The commodity monitoring device 30 identifies the moved commodity from the image taken by the camera 302. Then, the commodity monitoring device 30 acquires the corresponding commodity code of the moved commodity and the total number of moved items. Specifically, the commodity monitoring device 30 includes a database that stores appearance feature data and unit weight data in association with the commodity code of each commodity. The commodity monitoring device 30 collates the feature amount of the commodity image captured by the camera 302 with the appearance feature data of each commodity and acquires the commodity code and unit weight data associated with the appearance feature data having the highest degree of similarity. Then, the commodity monitoring device 30 acquires the number of moved commodities by dividing the unit weight data by the displacement amount of the weight detected by the weight sensor.

Once the moving direction, the moving time, the place code, the commodity code, and the number of moved items are acquired in this way, the commodity monitoring device 30 transmits a movement notification command to the sales management device 60 by the communication unit. The movement notification command includes information on the moving direction, the moving time, the place code, the commodity code, and the number of moved items. That is, the commodity monitoring device 30 creates the movement notification command which includes information on the moving direction, the moving time, the place code, the commodity code, and the number of moved items each time the movement of a commodity is detected based on the signal from the sensor 301 and the image captured by the camera 302, and then the commodity monitoring device 30 outputs the created movement notification command to the sales management device 60. Thus, the commodity monitoring device 30 functions as a monitoring unit for monitoring the display place of each commodity in the store.

The checkout device 40 is a terminal for settling a sales transaction with a customer. The checkout device 40 can settle a transaction by a settlement method such as cash settlement, credit card settlement, electronic money settlement, point settlement, and code settlement (also referred to as mobile settlement or smartphone settlement). The checkout device 40 includes a code reader for reading the customer ID.

The checkout device 40 outputs the checkout instruction command including the customer ID to the sales management device 60 when the customer ID used in the check-in operation is read by the code reader. As a result, the checkout data of the customer identified by the customer ID is sent from the sales management device 60, so that the checkout device 40 settles the transaction based on the checkout data. Checkout data includes sales data for the commodities purchased by the customer.

The checkout device 40 includes a manned checkout device in which a store staff inputs information for the settlement and a self-service checkout device in which a customer inputs information for the settlement. A self-service checkout device can be provided in an unmanned store that does not have store employees such as store staff. A well-known self-service type or semi-self-service type checkout device of the related art can be applied as the self-service checkout device.

The store server 50 is a computer specialized for supporting all store operations. To support this, the store server 50 manages various databases such as a membership database and a commodity information database.

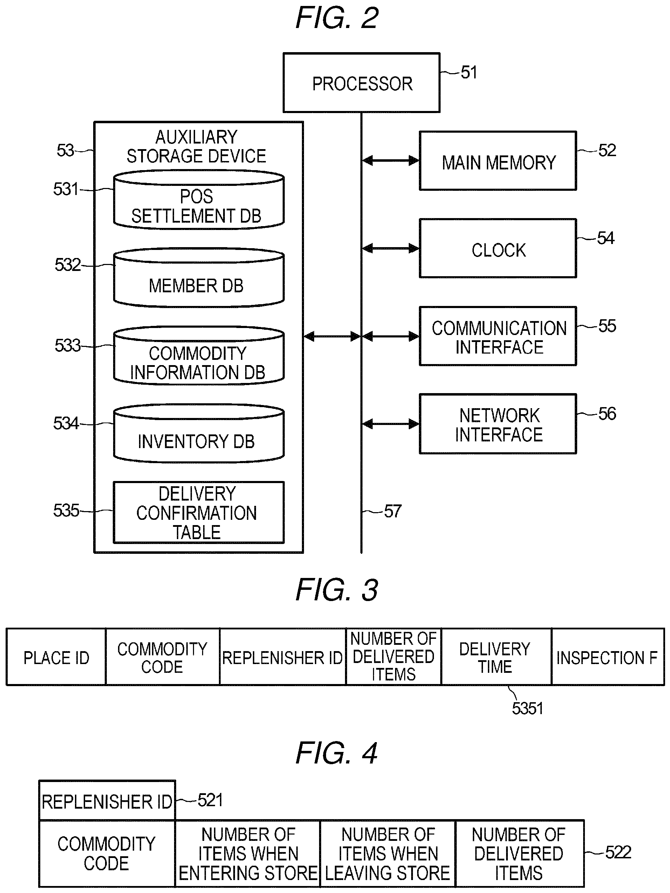

FIG. 2 is a block diagram illustrating a circuit configuration of a main part of the store server 50. The store server 50 includes a processor 51, a main memory 52, an auxiliary storage device 53, a clock 54, a network interface 56, a communication interface 55, and a system transmission line 57. The processor 51, the main memory 52, the auxiliary storage device 53, the clock 54, the network interface 56, and the communication interface 55 are each connected to the system transmission line 57. The system transmission line 57 includes an address bus, a data bus, a control signal line, and the like. In the store server 50, the processor 51, the main memory 52, and the auxiliary storage device 53 are connected by the system transmission line 57 to configure a computer that performs information processing for controlling the store server 50.

The processor 51 corresponds to the central part of the computer. The processor 51 controls each unit to perform various functions as the store server 50 according to an operating system or an application program. The processor 51 is, for example, a Central Processing Unit (CPU).

The main memory 52 corresponds to the main storage part of the computer. The main memory 52 includes a non-volatile memory area and a volatile memory area. The main memory 52 stores an operating system or application program in the non-volatile memory area. The main memory 52 stores data necessary for the processor 51 to execute processing for controlling each unit in the volatile memory area. Further, the main memory 52 uses the volatile memory area as a work area in which data is appropriately rewritten by the processor 51. The non-volatile memory area is, for example, a Read Only Memory (ROM). The volatile memory area is, for example, a Random Access Memory (RAM).

The auxiliary storage device 53 corresponds to the auxiliary storage part of the computer. As the auxiliary storage device 53, known storage devices such as an Electric Erasable Programmable Read-Only Memory (EEPROM), a Hard Disc Drive (HDD), or a Solid State Drive (SSD) are used alone or in combination. The auxiliary storage device 53 stores data used by the processor 51 in performing various kinds of processing and data generated by the processing in the processor 51. For example, the auxiliary storage device 53 can store various databases such as a POS settlement database 531, a member database 532, a commodity information database 533, and an inventory database 534. In FIG. 2, the database is abbreviated as DB. The auxiliary storage device 53 may store an application program.

The POS settlement database 531 is a set of POS settlement data records in which POS settlement data related to the settlement is described every time a transaction is settled by the checkout device 40. The POS settlement data record includes data items such as a commodity, department, time zone, date, week, and month. The POS settlement data includes the number of sales, the amount of sales, and the like.

The member database 532 is a set of member records in which data related to so-called members, who are registered as store users, is described. The member record includes data items such as customer ID, valid period, and accumulated points. The valid period is data indicating the valid period as a member. The data may be the start date and the end date of the period or the start date and the number of days of the period. The accumulated points are points accumulated in a transaction with a member, that is, the points given to the consumer who is the member.

The commodity information database 533 is a set of commodity records in which the data of each commodity sold in store 1 is described. A commodity record is composed of data items such as commodity code, commodity name, price, and the like. The commodity code is a unique identification code set for each commodity in order to individually identify each commodity.

The inventory database 534 is a set of inventory data records in which data related to the number of inventory items in the store 1 of each commodity is described. The inventory data record includes data items such as the commodity code and the inventory quantity. The inventory quantity is the number of commodities displayed at the display place.

The clock 54 tracks the current date and time.

The communication interface 55 is a circuit for performing data communication with another device connected via a LAN, which is a communication unit.

The network interface 56 is a circuit for performing data communication with a device outside the store via an external network 2 such as the Internet.

When the store server 50 having such a configuration receives an inquiry about the validity of the customer ID from the gate device 10, the store server 50 searches the member database 532. Then, the store server 50 checks the valid period of the member record including the customer ID inquired. When the current date and time is within the valid period, the store server 50 returns a response indicating validity to the gate device 10. When the current date and time is outside the valid period, a response indicating invalidity is returned to the gate device 10. The validity determination condition is not limited to the validity period. For example, a response indicating invalidity may be returned for a customer ID for which entry prohibition was set based on past store usage records.

The sales management device 60 manages the data related to the purchase commodity of the customer who is validated by the check-in operation in the gate device 10 and is tracked by the person tracking device 20. That is, the sales management device 60 identifies the commodity purchased by the customer based on the tracking result of the customer from the person tracking device 20 and the movement command from the commodity monitoring device 30, and then, registers the data of the commodity in the customer's purchase list. Next, the sales management device 60 generates checkout data based on the data registered in the purchase list and outputs the checkout data to the checkout device 40.

With such a sales management system, commodities displayed in the store can be sold without the involvement of store employees such as store staff.

The inventory management system of the present embodiment temporarily creates a replenisher table in the main memory of the store server 50 in the sales management system. Further, in the commodity information database 533 stored in the auxiliary storage device 53 of the store server 50, the commodity record for each commodity is further added with data items such as the lower limit of the inventory quantity and the order quantity. The lower limit of the inventory quantity is a threshold value for determining whether to place an order for commodity replenishment. The order quantity indicates how many commodities are ordered when ordering. The inventory management system of the present embodiment further stores a delivery confirmation table 535, which will be described below, in the auxiliary storage device 53 of the store server 50. The store server 50 is connected to the gate device 10 and the commodity monitoring device 30 by the communication interface 55. Further, the store server 50 is provided with an order acceptor server 3 capable of communicating via the external network 2 such as the Internet.

FIG. 3 is a schematic diagram illustrating the data structure of the delivery confirmation table 535 stored in the auxiliary storage device 53 of the store server 50. The delivery confirmation table 535 stores a commodity code, a replenisher ID, the number of delivered items, a delivery time, and an inspection flag as one record 5351 in association with a place ID. The place ID is a unique identification code set for each display place in order to identify the display place of each commodity. The commodity code corresponds to the commodity displayed at that display place. The replenisher ID is for identifying the replenisher who replenished the commodity. The replenisher ID is an example of a member ID. The replenisher ID is a unique identification code assigned to the replenisher who delivers the commodity to the store 1. The number of delivered items and the delivery time are the number of commodities replenished by the replenisher indicated by the replenisher ID and the date and time when the replenishment is performed. The inspection flag is a flag that is set when the store server 50 inspects a commodity. In FIG. 3, the flag is abbreviated as F. The delivery confirmation table 535 includes such a record 5351 for each display place.

The member database 532 in the inventory management system can include a replenisher record in which data on a replenisher is described in addition to a member record for a customer who uses the store 1. Of course, the auxiliary storage device 53 may store a database having only replenisher records, separately from the member database 532. The replenisher record includes data items such as replenisher ID, name, and affiliation.

FIG. 4 is a schematic diagram illustrating the data structure of the replenisher table temporarily created in the main memory 52 by the store server 50. The replenisher table stores, for each commodity, a commodity record 522 in which a replenisher ID 521 is associated with the commodity code and the number of items when entering the store (e.g., arriving number), the number of items when leaving the store (e.g., departing number), and the number of delivered items (e.g., number of replenished commodities) are stored in one record. The number of items when entering the store is the number of commodities read by the gate device 10 with the tag reader 102 and brought into the store 1 by the replenisher when entering the store. The number of items when leaving the store is the number of commodities read by the gate device 10 with the tag reader 102 and brought out from the store 1 by the replenisher when leaving the store. The number of delivered items is the number of commodities displayed by the replenisher at the designated display place in the store 1.

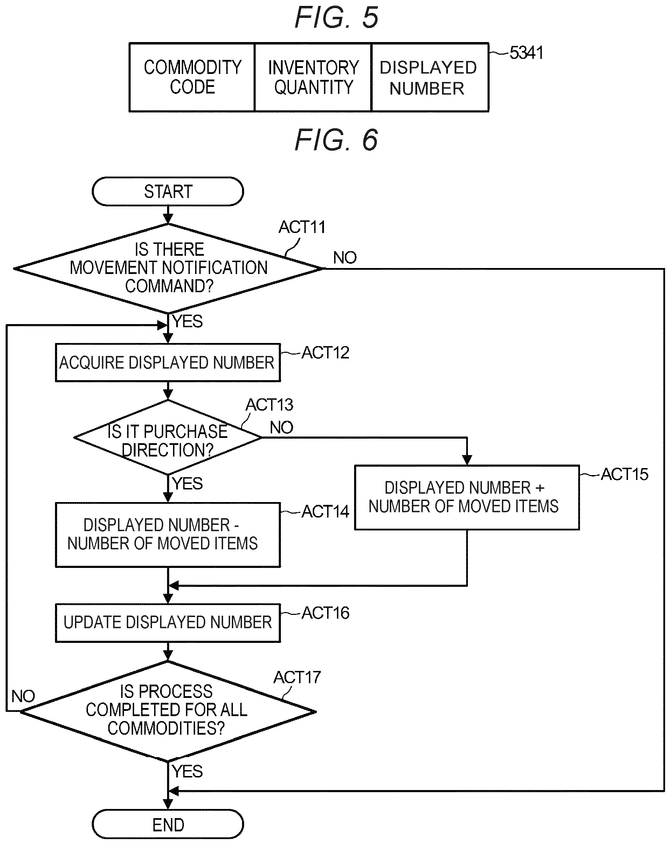

FIG. 5 is a schematic diagram illustrating the data structure of the inventory database 534 stored in the auxiliary storage device 53 of the store server 50. The inventory database 534 is, as described above, a set of inventory data records 5341 in which the data on the inventory quantity of each commodity in the store 1 is described. In the sales management system, the inventory data record 5341 includes data items such as a commodity code and an inventory quantity. In the inventory management system, each inventory data record 5341 includes a data item for a displayed number in addition to the commodity code and the inventory quantity. The displayed number indicates the number of displayed commodities that will change depending on the number of moved items of the commodities included in the movement notification command from the commodity monitoring device 30. Until the customer settles for the commodity, the inventory quantity, and the displayed number does not match. When the settlement is made by the checkout device 40, the POS settlement database 531 and the inventory database 534 of the store server 50 are updated and the inventory quantity and the displayed number match.

When the inventory quantity, which is the number of displayed commodities, falls below a predetermined lower limit, the store server 50 transmits an order instruction for requesting replenishment of commodities to the order acceptor server 3 via the external network 2. The order acceptor server 3 is, for example, a server of a manufacturer that supplies commodities, or a wholesaler server that mediates commodity transactions between the manufacturer and the store 1. The order acceptor server 3 receives, from the store server 50, an order instruction for requesting the replenishment of the commodity that needs replenishment, as indicated by the dashed arrow in FIG. 1. In response to the receipt of this order instruction, the order acceptor server 3 makes an arrangement to deliver the commodity to be replenished to a delivery person managed by the order acceptor server, for example, a delivery person of the company or a contracted delivery company.

In addition, the store 1 may operate an online shopping system which receives online orders for commodities sold by the store 1 and sends the commodities out. The online shopping system includes an online shopping server 4 with which the store server 50 can communicate via the external network 2 as illustrated by the dashed arrow in FIG. 1. An online shopping user terminal 5 can communicate with the online shopping server 4 via the external network 2, as indicated by the dashed arrow in FIG. 1. The online shopping user terminal 5 is a terminal used by a customer who is a registered user of the online shopping system. A customer ID is assigned to the customer of the online shopping user terminal 5 similarly to the customer who uses the store 1. When the online shopping server 4 receives the purchase order for a commodity from the online shopping user terminal 5, the online shopping server 4 transmits a delivery instruction to the delivery person server 6 via the external network 2 as indicated by the dashed arrow in FIG. 1. This delivery instruction is an instruction for a delivery person of the contracted delivery company to deliver the ordered commodity stored in the distribution warehouse to the ordering customer.

The inventory management system of the present embodiment can include this online shopping system. That is, the store server 50 transmits an order instruction for requesting the replenishment of the commodity to the online shopping server 4 via the external network 2 when the inventory quantity, which is the number of the displayed commodity, falls below the predetermined lower limit. The online shopping server 4 receives, from the store server 50, the order instruction for requesting the replenishment of the commodity that needs to be replenished, as indicated by the dashed arrow in FIG. 1. In response to the reception of this order instruction, the online shopping server 4 transmits a delivery instruction of the commodity to be replenished to the delivery person server 6 via the external network 2, as indicated by the dashed arrow in FIG. 1.

FIGS. 6, 7, 12, and 13 are flowcharts illustrating main information processing procedures executed by the processor 51 of the store server 50 in accordance with the control program. The operation of the inventory management system will be described below with reference to the drawings. The description of the operation described below is an example. As long as similar results are obtained, the procedure and the like are not particularly limited.

FIG. 6 is a flowchart illustrating the procedure of the inventory database update process executed by the processor 51 of the store server 50 according to the control program at regular intervals, for example, every few seconds.

For each commodity, the processor 51 determines whether the movement notification command is received from the commodity monitoring device 30 between the previous inventory database update process and the current inventory database update process (ACT 11). As described above, the movement notification command is output from the commodity monitoring device 30 when the movement of the commodity is detected. For example, when the sales management device 60 receives the movement notification command from the commodity monitoring device 30, the sales management device 60 records the reception time. Therefore, the processor 51 can perform the determination by inquiring the sales management device 60 about the reception record of the movement notification command. Alternatively, the processor 51 may monitor the movement notification command from the commodity monitoring device 30 and temporarily store the movement notification command in the main memory when the movement notification command is present. When the commodity may be displayed in more than one display place, the determination is performed on each one. When the movement notification command was not received for any of the commodities (NO in ACT 11), the processor 51 ends this inventory database update process.

On the other hand, when the movement notification command is received for any of the commodities (YES in ACT 11), the processor 51 acquires the displayed number (ACT 12). That is, the processor 51 acquires the displayed number from the inventory data record 5341 corresponding to the commodity in the inventory database 534, based on the commodity code included in one movement notification command.

Next, it is determined whether the moving direction indicated by the movement notification command indicates the purchase direction or the return direction (ACT 13).

When the moving direction indicates the purchase direction (YES in ACT 13), the processor 51 subtracts the number of moved items indicated by the movement notification command from the displayed number acquired in ACT 12 (ACT 14).

When the moving direction indicates the return direction (NO in ACT 13), the processor 51 adds the number of moved items indicated by the movement notification command to the displayed number acquired in ACT 12 (ACT 15).

Then, the processor 51 updates and records the calculation result in the processing of ACT 14 or ACT 15 in the inventory data record 5341 corresponding to the commodity in the inventory database 534 as a new displayed number (ACT 16).

Then, the processor 51 determines whether the processing was completed for all the commodities for which the movement notification command is received (ACT 17). When there is a commodity that was not processed yet (NO in ACT 17), the processor 51 returns to the processing of ACT 12. On the other hand, when the processing is completed for all the commodities (YES in ACT 17), the inventory database update processing is ended.

For example, when the inventory quantity of a certain commodity and the displayed number are 10 and the customer takes one commodity from the display place, the number of moved items in the purchase direction becomes one. In this case, the displayed number is calculated to be nine in ACT 14. The inventory quantity remains ten. When the checkout device 40 makes a settlement, the inventory quantity is updated to nine, which is the same as the displayed number. When the commodity is returned to the original display place without a settlement, the number of moved items in the return direction will be one. As a result, the displayed number is calculated to be ten in ACT 15, which matches the inventory quantity of 10.

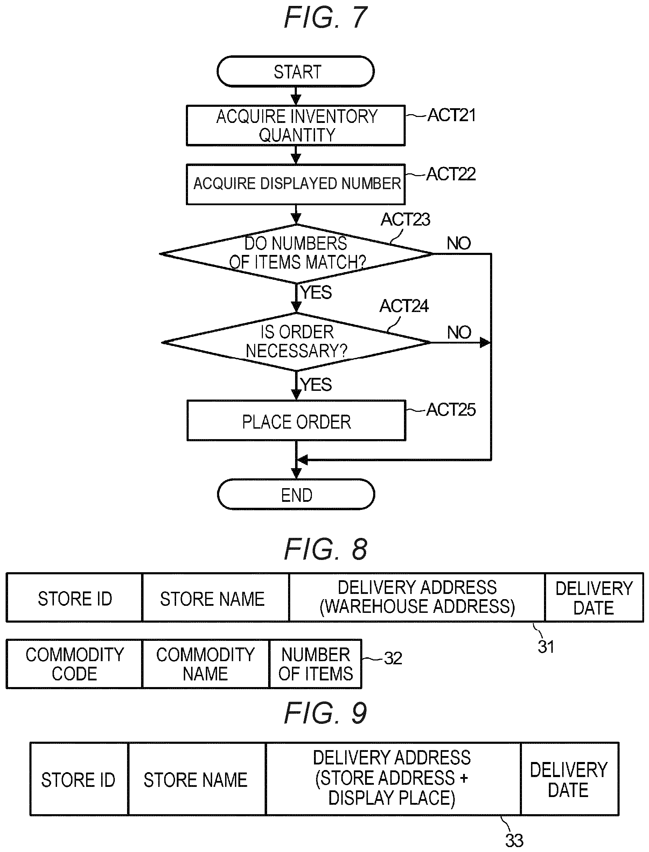

FIG. 7 is a flowchart illustrating the procedure of the commodity ordering process executed by the processor 51 of the store server 50. The commodity ordering process illustrated in FIG. 7 is a process for one commodity. The processor 51 sequentially executes this commodity ordering process for all commodities. When the processor 51 finishes the process for all the commodities, the processor 51 immediately repeats the process from the first commodity. Of course, the processor 51 may repeat the process from the first commodity after a predetermined period of time, instead of repeating immediately.

The processor 51 acquires the inventory quantity from the inventory data record 5341 of the commodity to be processed in the inventory database 534 (ACT 21). Further, the processor 51 acquires the displayed number from the inventory data record 5341 (ACT 22). Then, it is determined whether the acquired inventory quantity and the number of items after the movement match (ACT 23).

Here, when the two do not match (NO in ACT 23), the processor 51 ends the commodity ordering process. That is, the processor 51 waits for the commodity taken by the customer to be settled and the inventory quantity to be determined. Since the commodity previously taken by the customer may be returned to the original display place, the processor 51 confirms that the commodity will not be returned and then proceeds with the ordering process.

When the acquired inventory quantity and the displayed number match (YES in ACT 23), the processor 51 determines whether an order is necessary (ACT 24). That is, the processor 51 determines the necessity of an order based on whether the current inventory quantity is less than the lower limit of the inventory quantity. The lower limit of the inventory quantity is stored in the commodity record of the commodity information database 533 corresponding to the commodity code of the commodity. Here, when the order is not required (NO in ACT 24), the processor 51 ends the commodity ordering process.

On the other hand, when the order is required (YES in ACT 24), the processor 51 generates a signal to place the order (ACT 25). The ordered quantity at this time is stored in the commodity record of the commodity information database 533 corresponding to the commodity code of the commodity. Thus, the processor 51 functions as an ordering unit which determines the necessity of replenishment of each commodity and transmits an order instruction for requesting the replenishment of the commodity that needs replenishment to the management device that manages the person in charge of replenishment, based on the monitoring result of the display place of each commodity in the store.

Here, the ordering process of ACT 125 will be described in more detail.

In this ordering process, the processor 51 creates a commodity order instruction and sends the created commodity order instruction to the order acceptor server 3 such as the manufacturer or wholesaler via the external network 2 such as the Internet by the network interface 56.

FIG. 8 is a schematic diagram illustrating a data structure of order source information and order content information in a general commodity order instruction. Further, FIG. 9 is a schematic diagram illustrating a data structure of order source information in the commodity order instruction by the inventory management system of the present embodiment.

As illustrated in FIG. 8, a general commodity order instruction to the order acceptor server 3 includes order source information 31 which is information about the ordering store, and order content information 32 which is information about each commodity to be ordered. When there is a plurality of commodities to be ordered in one order, a plurality of pieces of order content information 32 are transmitted.

The order source information 31 includes a store ID, a store name, a delivery address, and a delivery date. The store ID is a unique identification code set for each store in order to specify the store 1 as the ordering source. The store name is the name of the store 1 indicated by the store ID. The delivery address is a delivery address of the commodity and the address of the distribution warehouse of the store 1 is designated. The delivery date is the date and time when the item is desired to be delivered.

The order content information 32 includes a commodity code, a commodity name, and the number of items. The commodity code is information for identifying the commodity to be ordered. The commodity name is the name of the commodity to be ordered. The number of items is the ordered quantity.

In the inventory management system of the present embodiment, the order content information 32 is the same as the general commodity order instruction, but the order source information is order source information 33 as illustrated in FIG. 9. The processor 51 sets position information indicating the address of the store 1 and the display place as the delivery address of this order source information 33 rather than the address of the distribution warehouse for the store 1. That is, the processor 51 designates a display place such as a particular commodity shelf, commodity case, and sales space in the store 1 where the commodity being ordered is actually displayed as a delivery destination.

The order acceptor server 3 which received such a commodity order instruction makes an arrangement to deliver the commodity designated by the order content information 32 to a delivery person managed by the order acceptor server 3, for example, a delivery person of the company or a contracted delivery company. Then, the delivery person displays the commodity at the designated display place of the store 1 according to the order source information 33. That is, the delivery person not only delivers the commodity to the ordering store 1 but also acts as a replenisher for restocking the commodity at the actual display place of the store 1. Therefore, the order acceptor server 3 is a management device that manages the person in charge of replenishment.

When there is a commodity in the distribution warehouse of the store 1, the processor 51 transmits a commodity order instruction to the online shopping server 4 via the external network 2. Specifically, for the commodity purchase form provided by the online shopping server 4, the processor 51 automatically inputs the store ID and store name of the store 1 as the customer ID and customer name, and then automatically inputs the address of the store 1 and the display place as the customer address. Next, the processor 51 automatically inputs the commodity ID and the commodity name which specify the commodity and further automatically inputs the purchased quantity and the purchase price. In this case, the purchase price is zero yen because the purchase is a movement of the commodity in the own store.

The online shopping server 4 determines whether the order is from the online shopping user terminal 5 operated by a general online shopping user or the store server 50. The determination can be easily made depending on whether the delivery address is the own store 1. Then, the online shopping server 4 transmits a delivery instruction based on the determination result to the delivery person server 6 of the delivery company contracted by the company via the external network 2.

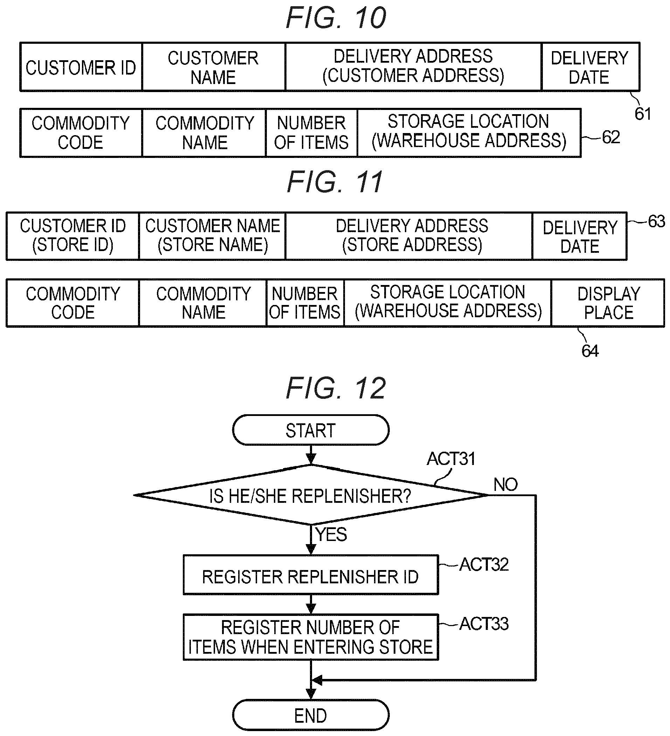

FIG. 10 is a schematic diagram illustrating a data structure of delivery destination information and delivery content information in the delivery instruction to the online shopping user transmitted from the online shopping server 4 to the delivery person server 6. FIG. 11 is a schematic diagram illustrating a data structure of delivery destination information and delivery content information in the delivery instruction to the store 1 transmitted from the online shopping server 4 to the delivery person server 6. The delivery instruction is an instruction to have a delivery person of a delivery company contracted by the store 1 deliver the ordered commodity stored in the distribution warehouse to the online shopping user of the ordering source, that is, the customer or the store 1.

As illustrated in FIG. 10, the delivery instruction for delivering the commodity to the customer includes delivery destination information 61 which is information about the customer at the delivery destination, and delivery content information 62 which is information about each commodity to be delivered. When there is a plurality of commodities to be delivered in one order, a plurality of pieces of delivery content information 62 are transmitted.

The delivery destination information 61 includes a customer ID, a customer name, a delivery address, and a delivery date. The customer ID is a unique identification code assigned to an online user, similarly to the customer who uses the store 1. The customer name is the name of the online user indicated by the customer ID. The delivery address is the address of the online user to whom the commodity will be delivered. The delivery date is the date and time when delivery is desired.

The delivery content information 62 includes a commodity code, a commodity name, the number of items, and a storage location. The commodity code is information for identifying the commodity to be delivered. The commodity name is the name of the commodity to be delivered. The number of items is the number of items to be delivered. The storage location indicates where the commodity to be delivered is stored in the distribution warehouse.

Also, as illustrated in FIG. 11, the delivery instruction to deliver the commodity to the store 1 includes delivery destination information 63 which is information about the delivery destination store 1, and delivery content information 64 which is information about each commodity to be delivered. When there is a plurality of commodities to be delivered in one order, a plurality of pieces of delivery content information 64 are transmitted.

In the delivery destination information 63 when the delivery destination is the store 1, the customer ID is the store ID and the customer name is the store name. Also, the delivery address is the address of the store 1.

The delivery content information 64 includes a commodity code, a commodity name, the number of items, and a storage location, like the delivery content information 62 when the delivery destination is a customer, and further includes a display place. The display place indicates a display place such as a commodity shelf, a commodity case, and a sales space in the store 1 where the commodity is actually displayed.

Upon receiving such a delivery instruction, the delivery person server 6 makes an arrangement to deliver the commodity designated by the delivery content information 62 or 64 to a delivery person managed by the delivery person server 6. Then, the delivery person picks up the ordered commodity stored in the distribution warehouse according to the delivery content information 62 and delivers the ordered commodity to the designated online user according to the delivery destination information 61. Further, the delivery person picks up the ordered commodity stored in the distribution warehouse according to the delivery content information 64 and displays the ordered commodity at the designated display place of the designated store 1 according to the delivery destination information 63. In other words, the delivery person not only delivers the commodity to the ordering store 1 but also acts as a replenisher who restocks the commodity at the actual display place of the store 1. Therefore, the delivery person server 6 is a management device that manages the person in charge of replenishment.

FIG. 12 is a flowchart illustrating the procedure of a registration process of the number of items when entering the store, which is executed by the processor 51 of the store server 50 when the replenisher enters the store. This shows a processing procedure of the processor 51 when a delivery person arranged by the order acceptor server 3 or a delivery person arranged by the delivery person server 6 comes to the store 1 as a replenisher who replenishes commodities at the display place.

As described above, when the customer ID of the customer who is about to enter the store is read by the code reader 101, the gate device 10 inquires about the validity of the customer ID, for example, to the store server 50. The processor 51 of the store server 50 determines the validity of the customer ID by referring to the member database 532 and returns the determination result to the gate device 10. The gate device 10 opens the gate of the gate mechanism when validity of the customer ID is confirmed.

In the same manner, when a delivery person enters the store 1, the code reader 101 reads the replenisher ID. The gate device 10 does not distinguish between a customer ID and a replenisher ID. Therefore, the gate device 10 uses the read replenisher ID as a customer ID to inquire of the store server 50 about the validity thereof. The processor 51 of the store server 50 determines the validity of the customer ID by referring to the member database 532 and returns the determination result to the gate device 10. The gate device 10 opens the gate of the gate mechanism when validity of the customer ID is confirmed.

When the processor 51 of the store server 50 confirms the validity with regard to the inquiry about the validity of the customer ID, the processor 51 returns a response indicating validity to the gate device 10 and executes the registration process of the number of items when entering the store, which is illustrated in FIG. 12.

The processor 51 determines whether the person who is about to enter the store is a replenisher (delivery person) or a customer (ACT 31). This determination can be made by whether the customer ID transmitted from the gate device 10 is a replenisher ID or not. Thus, the processor 51 functions as a specifying unit which identifies each visitor to the store 1 by type (e.g., a customer or a replenisher). When the person who is about to enter the store is a customer (NO in ACT 31), the processor 51 ends this registration process of the number of items when entering the store.

On the other hand, when the person who is about to enter the store is a replenisher (YES in ACT 31), the processor 51 registers the replenisher ID in the replenisher table (ACT 32). That is, the processor 51 creates a replenisher table in the main memory 52 and stores this replenisher ID as the replenisher ID 521 of the replenisher table.

Then, the processor 51 registers the number of respective commodities being brought into the store 1 by the replenisher (the number is transmitted from the gate device 10) in the replenisher table as the number of items when entering the store (ACT 33). That is, the gate device 10 uses the tag reader 102 to read the commodity tag of each commodity being brought into the store 1 by the store visitor and transmits the commodity code to the store server 50. The processor 51 stores the number of items in association with each commodity code in the commodity record 522 of the replenisher table of the main memory 52 as the number of items when entering the store. Thus, the processor 51 functions as a first number-of-items detecting unit for detecting the number of items of replenishment commodities brought into the store in order to replenish the designated display place in the store.

Then, the processor 51 ends this registration process of the number of items when entering the store.

The delivery person places each commodity brought into the store 1 at the appropriate display place as designated by the delivery content information 64. In this case, due to the inventory database update process described with reference to FIG. 6, the processor 51 updates the number of items after the movement of inventory data record 5341 corresponding to the commodity in the inventory database 534, according to the display work (restocking) of the commodity at the display place.

Then, when the delivery person completes the replenishment of the commodity to the designated display place, he/she tries to leave the store and causes the code reader 101 of the gate device 10 to read the replenisher ID. In response to this, the gate device 10 uses the tag reader 102 to read the commodity code from the commodity tags of the commodities that the delivery person is about to take out of the store 1. The gate device 10 does not need to distinguish between a customer ID and a replenisher ID at this point. Therefore, the gate device 10 uses the read replenisher ID as a customer ID and inquires of the store server 50 as to whether or not the delivery person can leave the store based on the customer ID and the commodity codes of the commodities. The processor 51 of the store server 50 determines whether the person can leave the store based on the customer ID and the stored commodity codes of the commodities and returns a response indicating whether the person can leave the store to the gate device 10. In response, the gate device 10 opens or closes the gate of the gate mechanism.

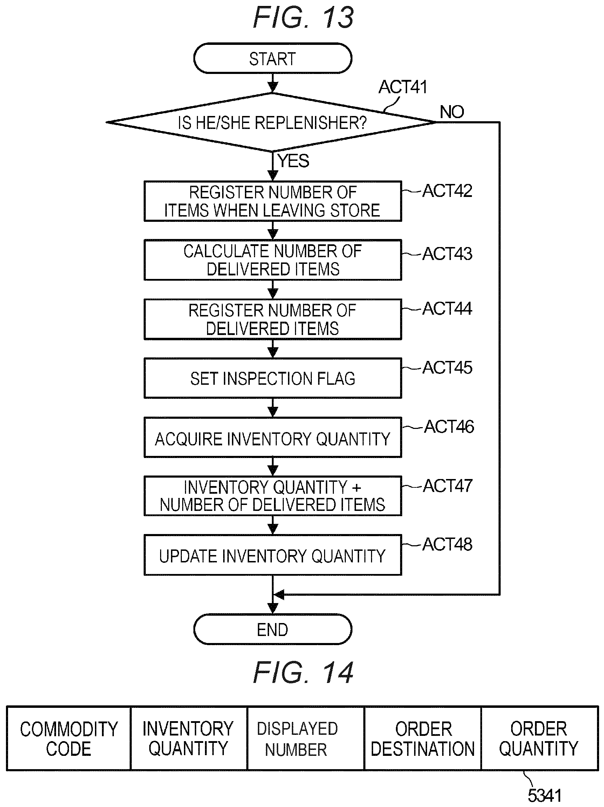

The processor 51 of the store server 50 returns a response indicating that the person can leave the store with respect to the inquiry about whether or not the person can leave the store to the gate device 10 and executes a commodity inspection process illustrated in FIG. 13. FIG. 13 is a flowchart illustrating the procedure of the commodity inspection process executed by the processor 51 of the store server 50 when the replenisher leaves the store.

The processor 51 determines whether the person who is about to leave the store is a replenisher or a customer (ACT 41). This determination can be made by whether the customer ID transmitted from the gate device 10 is a replenisher ID. Thus, the processor 51 functions as a specifying unit which identifies a person who leaves the store 1 by type. When the person who is about to leave the store is a customer (NO in ACT 41), the processor 51 ends this commodity inspection process.

On the other hand, when the person who is about to leave the store is a replenisher (YES in ACT 41), the processor 51 registers the number of respective commodities at the time of leaving the store in each commodity record 522 of the replenisher table created in the main memory 52. The number of items at the time of leaving the store is based on the commodity code included in the inquiry from the gate device 10. Thus, the processor 51 functions as a second number-of-items detecting unit for detecting the number of replenishment commodities to be taken out of the store.

Next, the processor 51 calculates the number of delivered items by the replenisher for each commodity registered in the replenisher table and registers the calculated number of delivered items as the number of delivered items in the commodity record 522 of each commodity in the replenisher table (ACT 43). That is, the processor 51 obtains the number of delivered items by calculating the difference between the number of items when entering the store and the number of items when leaving the store in each commodity records 522

Then, the processor 51 registers the replenisher ID and the number of delivered items in each record 5351 corresponding to the commodity code of the delivery confirmation table 535 based on the registered contents of the replenisher table (ACT 44). In this case, the processor 51 may register the current date and time tracked by the clock 54 as the delivery time. Thus, the processor 51 functions as a registering unit for calculating the difference between the number of replenishment commodities brought into the store and the number of replenishment commodities to be taken out of the store and registering the calculated number as the replenished number of the replenishment commodity.

Then, the processor 51 determines that the delivery of the commodity was confirmed and sets the inspection flag in each record 5351 corresponding to the commodity code of the delivery confirmation table 535 (ACT 45).

Next, the processor 51 acquires the inventory quantity of each commodity from the inventory database 534 (ACT 46). In this case, the processor 51 does not need to acquire the inventory quantity for all the commodities but only needs to acquire the inventory quantity for those commodities registered in the replenisher table.

Then, the processor 51 adds the number of delivered items to the acquired inventory quantity to calculate the estimated inventory quantity, which can be assumed as the inventory quantity after delivery (ACT 47). The processor 51 updates the inventory quantity of the commodity in the inventory database 534 with the calculated estimated inventory quantity (ACT 48). Then, the processor 51 ends this commodity inspection process.

For example, if it is detected that a delivery person brings in 30 items of a commodity type with an inventory quantity and displayed number which are both 10 and then tries to take out 10 items of the commodity type when leaving the store, the processor 51 calculates that the number of delivered items as being 30 - 10 = 20 in ACT 43. When the replenisher replenishes commodities directly to the display place, the processor 51 acquires the number of items moved in the return direction, the number being 20, by the inventory database updating process illustrated in FIG. 6 and the displayed number is calculated as 10 + 20 = 30. In this case, the inventory quantity remains 10, which does not match the displayed number. The processor 51 adds 10 as the inventory quantity and 20 as the number of delivered items in ACT 47 to calculate 30 as the estimated inventory quantity. Then, the processor 51 updates the inventory quantity to the estimated inventory quantity of 30 in ACT 48. In this way, the inventory quantity and the number of items after the movement (restocking) match.

Moreover, it generally takes some amount of time for the replenisher to perform the checkout operation at the gate device 10 after replenishing commodities to the display place. Thus, in the meantime, a customer may pick up the commodity from the display place. In such a case, in the above example, the displayed number is no longer 30. For example, when a customer takes one of the commodity, the number of items moved in the purchase direction becomes one and the processor 51 calculates that the displayed number is 29. In this case, even when the processor 51 updates the inventory quantity to 30 in ACT 48, the inventory quantity and the displayed number do not match. However, when the customer who took the commodity makes a settlement at the checkout device 40, the inventory quantity is updated to 29 and the inventory quantity and the displayed number are both 29. As a result, the inventory quantity and the number of items after the movement match each other. Also, when the customer returns the commodity to the original display place without making a settlement, the number of items moved in the return direction is one. As a result, the processor 51 calculates the displayed number to be 30, which matches the inventory quantity of 30.

In this example, the replenisher brings more commodities to the store 1 than the order quantity. This is because it can be assumed that more commodities will be taken by customers between the time of ordering and the time of replenishment and the number of commodities displayed at the display place will be reduced accordingly. Therefore, the number of ordered items and the number of delivered items may not always match and it is important to detect the actual number of delivered items.

The replenisher table created in the main memory 52 may be deleted when the inventory quantity is updated in ACT 48. Alternatively, the replenisher table may be deleted when it is determined that the corresponding replenisher left the store 1. Further, the replenisher table may be deleted at any time, for example, at the end of the business day of the store 1.

As described above, in the inventory management system of the first embodiment, the processor 51 of the store server 50 identifies the person entering or leaving the store 1, and when the person who enters the store is identified as a replenisher (delivery person) handling a commodity replenishment request, the processor 51 detects the number of replenishment commodities being brought into the store 1 to replenish a designated display place in the store 1. In addition, the processor 51 detects the number of replenishment commodities to be taken out of the store 1 when the person leaving the store is identified as a replenisher. Then, the processor 51 calculates the difference between the number of replenishment commodities brought into the store 1 and the number of replenishment commodities taken out of the store 1 and registers the calculated number in the delivery confirmation table 535 as the replenished number of the replenishment commodity.

In this way, a person who replenishes commodities at the commodity display place of the store 1 brings in the replenishment commodities from outside the store 1 and the difference between the number of items brought in and the number of items taken out of the store 1 is counted as the replenished number, and thus, it is possible to provide an inventory management system which enables commodity replenishment without relying on store employees, but rather relies on outside replenishers, such a delivery persons. For example, the person in charge of replenishment may be a delivery person of a delivery company that delivers replenishment commodities from a manufacturer, wholesaler, or distribution warehouse.

In addition, the inventory management system of the first embodiment includes the commodity monitoring device 30 for monitoring the display place of each commodity in the store. The processor 51 determines whether to replenish each commodity based on the monitoring result and transmits an order instruction for requesting the replenishment of the commodity to the order acceptor server 3 or the delivery person server 6, which is the management device that manages the person in charge of replenishment.

In this way, commodities that need replenishment can be ordered automatically, and thus, commodities can be ordered without relying on store employees.

Further, in the inventory management system of the first embodiment, the processor 51 includes, in the order instruction, position information indicating a display place where the commodity required to be replenished is displayed as a designated display place for replenishing the commodity.

By referring to this position information, the replenisher can confirm the display place to be replenished and can appropriately replenish the display place with the replenishment commodity.

In addition, the inventory management system of the first embodiment includes an online shopping system for selling the items of the store. The processor 51 transmits an order instruction to the online shopping server 4 of the online shopping system, with the display place indicated by the position information indicating the display place where the commodity required to be replenished is displayed as the delivery destination. In response to this, the online shopping server 4 transmits a delivery instruction for the replenishment commodity whose delivery destination is the display place indicated by the position information of the store 1 to the delivery person server 6 as a management device that manages a person in charge of replenishment.

In this way, by using the existing online shopping system, it is possible to configure a system which automatically orders commodities that need to be replenished while minimizing initial investment.

### [Second Embodiment]

The configuration of the sales management system of a second embodiment is the same as that of the first embodiment except that the data structure of the inventory database 534 stored in the auxiliary storage device 53 of the store server 50 is different.

FIG. 14 is a schematic diagram illustrating the data structure of the inventory database 534 in the inventory management system of the second embodiment. In the embodiment, in the inventory database 534, the inventory data record 5341 of each commodity includes data items of the order destination and the order quantity in addition to the commodity code, the inventory quantity, and the displayed number. The order destination indicates the order acceptor server 3 or the online shopping server 4 which placed the order for the commodity. The order quantity indicates the quantity ordered for the commodity.

Regarding the operation of the sales management system of the second embodiment, the processor 51 of the store server 50 is the same as that of the first embodiment, except for the commodity ordering process for placing an order for a replenishment commodity and the commodity inspection process performed when a replenisher leaves the store.

In the commodity ordering process, the processor 51 adds the following process when placing an order in the processing of ACT 25 described in the first embodiment. That is, the processor 51 stores the order quantity of the replenishment commodity in the inventory data record 5341 of the inventory database 534 corresponding to the commodity. In the embodiment, the order quantity is required to be larger than the inventory quantity at the time of ordering. That is, the lower limit of the inventory quantity for determining the necessity of ordering in ACT 24 is any value that is less than half the upper limit of the inventory quantity.

The order quantity when placing an order in ACT 25 may be stored in the commodity record of the commodity information database 533 corresponding to the commodity code of the commodity, as in the first embodiment.

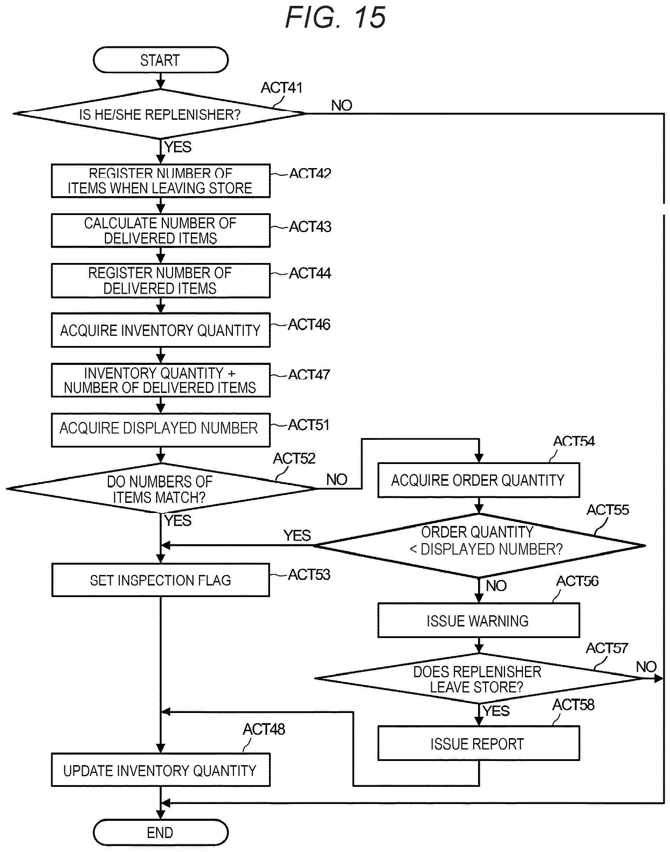

FIG. 15 is a flowchart illustrating a procedure of a commodity inspection process executed by the processor 51 of the store server in the inventory management system of the second embodiment when the replenisher leaves the store. The description of the operation described below is an example. As long as similar results are obtained, the procedure and the like are not particularly limited.

In FIG. 15, the processing of ACT 41 to ACT 45 is as described in the first embodiment. After the processing of ACT 45, the inspection flag is set in the first embodiment, but in this second embodiment, the inspection flag is not yet set at this point.

In this second embodiment, the processor 51 subsequently executes the processing of ACT 46 to acquire the inventory quantity of each commodity registered in the replenisher table from the inventory data record 5341 of the commodity of the inventory database 534. Then, by the processing of ACT 47, the processor 51 adds the number of delivered items of the commodity to the acquired inventory quantity, thereby calculating the estimated inventory quantity after delivery of each commodity.

Next, the processor 51 acquires the displayed number from the inventory data record 5341 of each commodity (ACT 51). Then, for each commodity, it is determined whether the calculated estimated inventory quantity and the number of items after the movement match (ACT 52).

Here, when two numbers match (YES in ACT 52), the processor 51 sets the inspection flag in each record 5351 corresponding to the commodity code of the delivery confirmation table 535 assuming that the delivery of the commodity was confirmed (ACT 53). Thus, by determining whether the replenishment commodity was restocked at the designated display place based on the monitoring result of the commodity monitoring device 30, the processor 51 functions as an inspection unit to inspect/confirm the commodity replenishment by any person in charge of replenishment. After that, the processor 51 proceeds to the processing of ACT 48 and updates the inventory quantity of the commodity in the inventory database 534 with the estimated inventory quantity calculated in ACT 47. Then, the processor 51 ends this commodity inspection process.

In addition, when the estimated inventory quantity and the displayed number do not match in ACT 52 (NO in ACT 52), the processor 51 acquires the order quantity of the commodity that does not match (ACT 54). That is, the processor 51 acquires the order quantity of the commodity registered as the order quantity in the inventory data record 5341 of the inventory database 534 corresponding to the commodity code of the commodity.

Then, the acquired order quantity is compared with the displayed number acquired in ACT 51 to determine whether the displayed number is larger than the order quantity (ACT 55). Here, when the displayed number is larger (YES in ACT 55), the processor 51 proceeds to the processing of ACT 53 and sets the inspection flag in the record 5351 corresponding to the commodity code of the commodity in the delivery confirmation table 535.

On the other hand, when the displayed number is not larger than the order quantity (NO in ACT 55), the processor 51 generates a warning signal (ACT 56). For example, the processor 51 causes the display unit of the gate device 10 to display a message or an image for notifying the delivery person the replenishment commodity was not restocked at the display place.

Then, the processor 51 determines whether a gate passage sensor of the gate device 10 detects that the replenisher passed the gate, that is, whether the replenisher left the store (ACT 57). When the replenisher has not leave the store (NO in ACT 57), the processor 51 ends this commodity inspection process.

When the replenisher leaves the store (YES in ACT 57), the processor 51 generates a report that the replenisher did not place the commodity at the right display place (ACT 58). The processor 51 transmits this report, for example, to the order destination registered in the inventory data record 5341 of the inventory database 534 corresponding to the commodity code of the commodity. The processor 51 may also transmit this report to the information terminal of an administrator who manages the store server 50 via the external network 2 by the network interface 56.

After generating the report, the processor 51 proceeds to the processing of ACT 48 and updates the inventory quantity of the commodity in the inventory database 534 with the estimated inventory quantity calculated in ACT 47. Then, the processor 51 ends this commodity inspection process.

For example, it is assumed that it is detected that a delivery person who is a replenisher brings in 30 commodities whose inventory quantity and the displayed number are 10 and tries to take out 10 commodities when leaving the store. In this case, the processor 51 calculates that the number of delivered items is 30 - 10 = 20 in ACT 43. When the replenisher replenishes commodities to the display place, the processor 51 obtains the number of items moved in the return direction, the number being 20, by the inventory database updating process illustrated in FIG. 6 and the displayed number is calculated to 10 + 20 = 30. At this time, the inventory quantity remains 10, which does not match the displayed number. The processor 51 adds 10 of the inventory quantity and 20 of the number of delivered items in ACT 47 to calculate 30 as the estimated inventory quantity. Here, in the second embodiment, the processor 51 determines in ACT 52 whether the estimated inventory quantity and the displayed number match. In this case, two numbers are 30, which match each other. Therefore, the processor 51 updates the inventory quantity to the estimated inventory quantity, which is 30, in ACT 48. In this way, the inventory quantity and the number of items after the movement match. In addition, since the estimated inventory quantity and the displayed number match, the replenishment commodity is confirmed to have been displayed at the corresponding designated display place. As a result, the processor 51 sets the inspection flag in ACT 53.

Moreover, since it takes some time for the replenisher to perform checkout operation on the gate device 10 after replenishing commodities to the display place, a customer may pick up the commodity from the display place. In such a case, in the above example, the displayed number is not 30. For example, when the customer takes one commodity, the number of items moved in the purchase direction becomes one, and thus the processor 51 calculates that the displayed number is 29. In this case, since the estimated inventory quantity calculated by the processor 51 in ACT 47 is 30, the processor 51 determines in ACT 52 that the estimated inventory quantity and the displayed number do not match. Therefore, the processor 51 acquires the order number of the commodity, for example, 15 in ACT 54. Then, in ACT 55, the processor 51 compares the order quantity with the displayed number, and in this case, determines that the displayed number, which is 29, is larger than the order quantity, which is 15. As a result, the processor 51 sets the inspection flag and updates the inventory quantity. Thus, even when the processor 51 updates the inventory quantity to 30 in ACT 48, the inventory quantity and the displayed number do not match. However, when the customer who took the commodity makes a settlement at the checkout device 40, the inventory quantity is updated to 29 and the inventory quantity and the displayed number are both 29. As a result, the inventory quantity and the number of items after the movement match. Also, when the customer returns the commodity to the original display place without making a settlement, the number of items moved in the return direction becomes one. As a result, the processor 51 calculates the displayed number to be 30, which matches the inventory quantity of 30.

On the other hand, when the replenisher has just brought in the replenishment commodity to the store 1 or has placed the replenishment commodity at a location other than the designated replenishment location, the following process(es) would happen. The processor 51 will calculates that the number of delivered items for the commodity is 20 in ACT 43 and the inventory quantity is 10, and thus the estimated inventory quantity is 30 in ACT 47. In addition, the processor 51 acquires the number of items after the movement of 10 in ACT 31. Therefore, the processor 51 determines in ACT 52 that the estimated inventory quantity and the displayed number do not match, and in ACT 54, acquires the order quantity of the commodity, for example, 15. Then, in ACT 55, the processor 51 compares the order quantity with the displayed number, and in this case, determines that the displayed number, which is 10, is smaller than the order quantity, which is 15. As a result, the processor 51 generates a warning signal in ACT 56. Upon receiving this warning, the replenisher will presumably place the replenishment commodity at the designated display position. After that, the replenisher again performs the check-out operation at the gate device 10 and the flow is the same as that in the case of an initially correct restocking.

When the replenisher ignores the warning and leaves the store, the processor 51 generates a warning signal in ACT 58 and updates the inventory quantity to 30 in ACT 48. As a result, the inventory quantity and the displayed number are both 30, which matches each other. However, in this case, since the processing of ACT 53 is not performed, the inspection flag of the record 5351 corresponding to the commodity code of the commodity of the delivery confirmation table 535 is not set. Therefore, when an inquiry is received from the order acceptor server 3 or the online shopping server 4 which received a warning as to which replenisher did not appropriately restock the replenishment commodity, by checking the inspection flag of the delivery confirmation table 535, the processor 51 can easily identify the replenisher and commodity of concern.

As described above, in the inventory management system of the second embodiment, by determining whether the replenishment commodity was placed at the designated display place based on the monitoring result of the commodity monitoring device 30, the processor 51 of the store server 50 inspects/monitors the commodity replenishment by persons in charge of replenishment.

This makes it possible to determine whether each replenisher correctly restocked commodities to the designated display place.

The present embodiment of the sales management device is capable of reducing the load required for the information processing of the inventory management system, which enables commodities displayed in the store to be sold without the involvement of store staff. However, the present disclosure is not limited thereto.

For example, in the embodiment described above, the unmanned store including a checkout device 40 is described as an example. However, the store may be an unmanned store that does not have a checkout device 40. In such a case, sales management device 60 can have an additional function of performing a checkout process of withdrawing the settlement amount from the customer's payment account or the like.

In addition, the necessity of ordering commodities can be determined after the inventory quantity and the displayed number match, that is, after the customer makes a settlement. However, the necessity of ordering may be determined only by the displayed number without waiting for the matching. In some examples, the necessity of ordering may be determined only based on the inventory quantity, not the displayed number. Furthermore, the necessity of ordering may be determined not on a per commodity basis but on a display place basis.

The person in charge of replenishing the replenishment commodity at the designated replenishment location is not limited to a delivery person of a delivery company. The replenisher may be a store company employee who travels a circuit or route through multiple stores 1 with various commodities for restocking. In this case, the employee sets a tour course (route) under the control of a management device such as an information terminal of an administrator who manages the order acceptor server 3, the online shopping server 4 or the delivery person server 6, or the store server 50.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An inventory management system, comprising:
a code reader configured to read identification (ID) for a person checking in and out of a store entrance;
a wireless tag reader configured to perform commodity code readings at the store entrance for checking in and out of the store entrance; and
a processing device configured to:
upon an ID read by the code reader at a check-in being associated with a commodity replenisher, determine a number of arriving commodities based on a commodity code reading performed by the wireless tag reader at the check-in;
upon an ID being read by the code reader for a check-out, determine a number of departing commodities based on a result of the commodity code reading performed by the wireless tag reader at the check-out; and
determine a number of replenished commodities based on a difference between the number of arriving commodities and the number of departing commodities.

2. The inventory management system according to claim 1, wherein the processing device is further configured to:
store an inventory number of commodities having a commodity code; and
update the inventory number by adding the number of replenished commodities having the commodity code to the stored inventory number for the commodity code.

3. The inventory management system according to claim 2, wherein the processing device is further configured to:
upon an ID being read by the code reader for check-out being associated with a customer, determine a number of purchased commodities based on a commodity code reading performed by the wireless tag reader at check-out of the customer; and
update the inventory number for a commodity code by subtracting the number of purchased commodities of the commodity code from the stored inventory number for the commodity code.

4. The inventory management system according to claim 2 or 3, further comprising:
a sensor configured to detect commodity removal and return at a commodity display, wherein
the processing device is further configured to:
store a displayed number of commodities having a commodity code;
determine a number of removed commodities having the commodity code based on a signal from the sensor; and
update the displayed number by subtracting the number of removed commodities from the stored displayed number.

5. The inventory management system according to claim 4, wherein the processing device is further configured to:
determine a number of commodities returned to the commodity display based on a signal from the sensor; and
update the displayed number by adding the number of commodities returned to the commodity display to the stored displayed number.

6. The inventory management system according to claim 4 or 5, wherein the processing device is further configured to:
determine whether the inventory number matches the displayed number;
when the inventory number matches the displayed number, determine whether the inventory number is less than a threshold number; and
when the inventory number is less than the threshold number, generate an order for inventory replenishment.

7. The inventory management system according to any one of claims 4 to 6, wherein the processing device is further configured to:
determine a sum of the stored inventory number stored and the number of replenished commodities;
determine whether the sum matches the displayed number; and
update the inventory number when the sum matches the displayed number.

8. The inventory management system according to claim 7, wherein the processing device is further configured to:
determine whether the displayed number is less than a threshold number when the sum does not match the displayed number; and
generate a warning signal when the displayed number is less than the threshold number.

9. An inventory management method, comprising:
upon an ID associated with a commodity replenisher being read by a code reader for entrance to a store, determining a number of arriving commodities based on a commodity code reading performed by a wireless tag reader at the entrance to the store;
upon the ID associated with the commodity replenisher being read by the code reader for a check-out from the store, determine a number of departing commodities based on a commodity code reading performed by the wireless tag reader for the check-out; and
determine a number of replenished commodities based on a difference between the number of arriving commodities and the number of departing commodities.

10. The inventory management method according to claim 9, further comprising:
storing an inventory number of commodities having a commodity code; and
updating the inventory number by adding the number of replenished commodities to the stored inventory number.

11. The inventory management method according to claim 10, further comprising:
upon an ID read by the code reader for check-out being associated with a customer, determining a number of purchased commodities based on a commodity code reading performed by the wireless tag reader at check-out of the customer; and
updating the inventory number for a commodity code by subtracting the number of purchased commodities of the commodity code from the stored inventory number for the commodity code.

12. The inventory management method according to claim 10 or 11, further comprising:
storing a displayed number of commodities having the commodity code;
detecting, with a sensor, a commodity removal from a commodity display section for commodities having the commodity code;
determining a number of removed commodities based on the detection with the sensor; and
updating the displayed number by subtracting the number of removed commodities from the stored displayed number.

13. The inventory management method according to claim 12, further comprising:
detecting, with the sensor, a number of commodities return to the commodity display section; and
updating the displayed number by adding the number of commodities returned to the commodity display to the stored displayed number.

14. The inventory management method according to claim 12 or 13, further comprising:
determining whether the inventory number matches the displayed number;
when the inventory number matches the displayed number, determining whether the inventory number is less than a threshold number; and
when the inventory number is less than the threshold number, generating an order for inventory replenishment.

15. The inventory management method according to any one of claims 12 to 14, further comprising:
determining a sum of the stored inventory number and the number of replenished commodities; and
determining whether the sum matches the displayed number, and
update the inventory number when the sum matches the displayed number.
